# EUROPÄISCHE PATENTSCHRIFT

(11) **EP 0 553 436 B1**
(45) Veröffentlichungstag und Bekanntmachung des Hinweises auf die Patenterteilung: **28.05.1997**
(21) Anmeldenummer: 92120548.0
(22) Anmeldetag: 02.12.1992
(51) Int. Cl.: H04M 3/30, H04Q 11/04

(54) **Verfahren zur Überprüfung der Funktionsfähigkeit von Übertragungsstrecken nachrichtentechnischer Signale**
Method for testing the operation of transmission links for telecommunication signals
Méthode pour tester le fonctionnement de liaisons de transmission de signaux de télécommunication

(30) Priorität: 13.12.1991 DE 4141090
(43) Veröffentlichungstag der Anmeldung: 04.08.1993
(73) Patentinhaber: KE KOMMUNIKATIONS-ELEKTRONIK GMBH & CO, D-30179 Hannover (DE)
(72) Erfinder: Bratschke, Thomas, W-3000 Hannover 21 (DE); Brahms, Martin, W-3000 Hannover 91 (DE); Fritz, Wolfgang, W-3000 Hannover 1 (DE); Timmermann, Andreas, W-3003 Ronnenberg 1 (DE)
(74) Vertreter: Döring, Roger, Dipl.-Ing.

(56) Entgegenhaltungen:
- EP-A- 0 451 759
- FR-A- 2 399 775
- US-A- 4 870 675
- US-A- 4 949 355
- POST OFFICE ELECTRICAL ENGINEERS JOURNAL Bd. 73, Januar 1981, London, GB, SS 216-222; M.G. FOXTON: 'System X: Subsystems. Part 5 - The Subscribers' Switching Subsystem'

## Beschreibung

Die Erfindung bezieht sich auf ein Verfahren zur Überprüfung der Funktionsfähigkeit von Übertragungsstrecken nachrichtentechnischer Signale in einem Telefonnetz, mit welchem die Signale einer Vermittlungsstelle als analoge Signale zugeführt, zwischen einer Systemeinheit der Vermittlungsstelle und mindestens einem Teilnehmer in einem Datenstrom als digitale Signale übertragen und bei dem Teilnehmer von einer Systemeinheit desselben wieder als analoge Signale zu einem Endgerät des Teilnehmers geführt werden und bei welchem in beiden Systemeinheiten zwischen der analogen und der digitalen Schnittstelle ein Übertrager mit Gabelschaltung, A/D-Umsetzer, ein Steuerblock und ein Leitungscodec eingesetzt werden (Siehe Zeitschrift "PKI Technische Mitteilungen 1/1988", Seiten 35 bis 40).

Digitale Übertragungsverfahren ermöglichen durch Zeitmultiplexierung die Mehrfachausnutzung von bestehenden Übertragungsstrecken. So werden beispielsweise in PCM30-Systemen 30 Sprachsignale einschließlich Signalisierung zu einem 2 Mbit/s-Datenstrom gebündelt. Ein anderes digitales Übertragungsverfahren ist das in der eingangs erwähnten Zeitschrift "PKI Technische Mitteilungen" beschriebene PCM2-Verfahren. Mit diesem bekannten Verfahren können zwei PCM-Kanäle über eine Doppelader übertragen werden. Die analogen Sprachsignale werden dazu in einer Vermittlungsstelle des Telefonnetzes digitalisiert, über die Doppelader übertragen und am Ende der Übertragungsstrecke wieder in analoge Sprachsignale umgesetzt.

Die Funktionsfähigkeit derartiger Übertragungsstrecken einschließlich der dafür verwendeten Geräte und Schaltungen muß ebenso gewährleistet werden können, wie die Funktionsfähigkeit des ganzen Telefonnetzes.

Der Erfindung liegt die Aufgabe zugrunde, das eingangs beschriebene Verfahren so weiterzubilden, daß die Funktionsfähigkeit der digitalen Übertragungsstrecke auf einfache Weise überprüft werden kann.

Diese Aufgabe wird gemäß der Erfindung dadurch gelöst,
- daß im Steuerblock mindestens einer der Systemeinheiten an den Übertragungsweg der einen Übertragungsrichtung ein Sender und ein Empfänger für digitale Signale angeschlossen werden und
- daß bei Aktivierung des Senders der Übertragungsweg für den Datenstrom der digitalen Signale unterbrochen und gleichzeitig zumindest die Gabelschaltung der Systemeinheit, deren Sender aktiviert ist, von der analogen Schnittstelle abgetrennt werden.

Wenn die Funktionsfähigkeit der digitalen Übertragungsstrecke einschließlich der Systemeinheiten oder die einer der Systemeinheiten selbst oder von Schaltungsteilen derselben überprüft werden soll, wird der im Steuerblock angeordnete Sender eingeschaltet. Gleichzeitig wird der Übertragungsweg für die digitalen Signale unterbrochen, so daß nur die vom Sender ausgesandten digitalen Signale zum Empfänger gelangen. Der Datenstrom kann beispielsweise durch Einsatz eines digitalen Multiplexers unterbrochen werden. Das vom Sender erzeugte digitale Signal gelangt dann beispielsweise zu einem der A/D-Umsetzer und wird von dort als analoges Signal zur Gabelschaltung geführt. Die Gabelschaltung ist durch ihre Abtrennung von der analogen Schnittstelle verstimmt, so daß das ankommende analoge Signal des Senders reflektiert wird und in den abgehenden Zweig der Gabelschaltung gelangt. Es wird von dem in diesem Übertragungsweg angeordneten A/D-Umsetzer wieder in ein digitales Signal umgesetzt und durchläuft den Steuerblock und den Leitungscodec der eigenen Systemeinheit, die Übertragungsstrecke, die Systemeinheit am fernen Ende und wieder die Übertragungsstrecke. Über den eigenen Leitungscodec gelangt das digitale Signal bei ungestörtem Übertragungsweg zum Empfänger. Wenn das Signal in einer bestimmten Zeit von beispielsweise 2 ms beim Empfänger ankommt und als Sendesignal des Senders erkannt wird, ist die Übertragungsstrecke funktionsfähig, die das Signal durchlaufen hat.

Dieses Verfahren ist besonders einfach und mit wenig Aufwand zu realisieren. Sender und Empfänger können im ohnehin vorhandenen Steuerblock integriert werden, bei dem es sich beispielsweise um einen Siliziumchip handeln kann. In demselben ist beispielsweise ein Gatearray enthalten. Sender und Empfänger werden vorzugsweise bereits bei der Herstellung des Siliziumchips mit auf demselben angebracht.

Vorteilhafte Ausgestaltungen der Erfindung gehen aus den Unteransprüchen hervor.

Das Verfahren nach der Erfindung wird anhand der Zeichnungen als Ausführungsbeispiel erläutert.

Es zeigen:

Fig. 1 in schematischer Darstellung das Ende einer Übertragungsstrecke nachrichtentechnischer Signale.

Fig. 2 eine Einzelheit aus Fig. 1 in vergrößerter Darstellung.

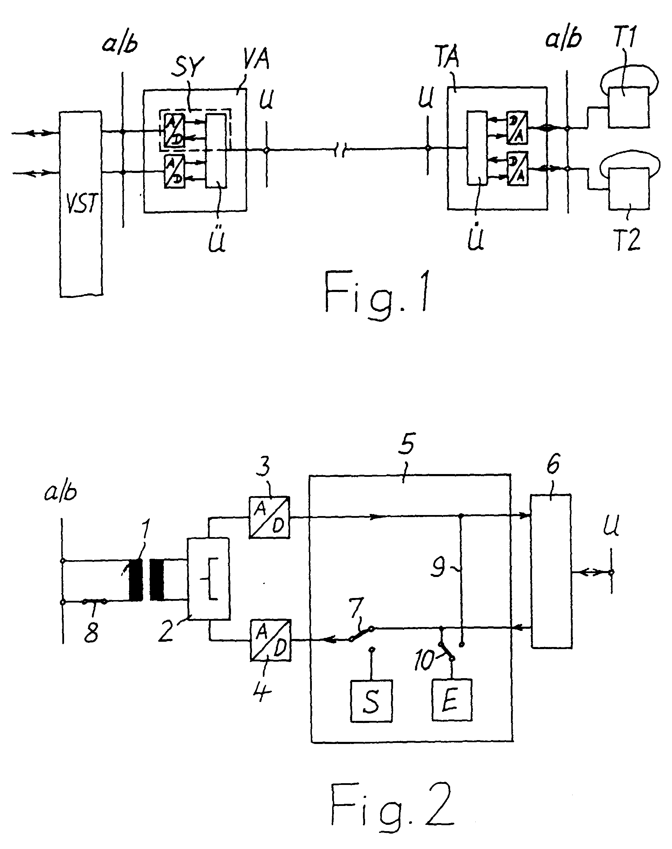

Fig. 1 zeigt schematisch eine Schaltung für ein PCM2-System, mit der zwei Teilnehmer T1 und T2 über eine als Doppelader ausgeführte Leitung L gleichberechtigt mit dem Telefonnetz verbunden werden können. Einer Vermittlungsstelle VST werden dazu über angeschlossene Leitungen analoge Signale aus dem Telefonnetz zugeführt bzw. umgekehrt. In Fig. 1 sind nur zwei derartige Leitungen eingezeichnet.

Die Signale gelangen von der Vermittlungsstelle VST über die analoge Schnittstelle a/b in eine Systemeinheit VA, deren Ausgang die digitale Schnittstelle U ist. Die in der Systemeinheit VA digitalisierten Signale werden über die Leitung L bis zu einer den beiden Teilnehmern T1 und T2 zugeordneten Systemeinheit TA übertragen, an deren analoger Schnittstelle a/b wieder analoge Signale zur Verfügung stehen. Die analogen Signale werden zu Endgeräten der Teilnehmer T1 und T2, beispielsweise zu Telefonen, geführt.

In den Systemeinheiten VA und TA sind Bauteile und Schaltungen enthalten, die im dargestellten Ausführungsbeispiel zum Durchverbinden von zwei Übertragungskanälen für die beiden Teilnehmer T1 und T2 geeignet sind. Es handelt sich dabei i. w. um A/D-Umsetzer und um eine Übertragungseinheit Ü, die jeweils zusammen ein für einen Teilnehmer erforderliches, für die Systemeinheit VA gestrichelt eingezeichnetes System SY bilden. Wenn an die Vermittlungsstelle VST bzw. die Leitung L nur ein Teilnehmer angeschlossen ist, wird in den Systemeinheiten VA und TA nur ein solches System SY benötigt. Das System SY bildet dann die Systemeinheit VA bzw. TA. Bei mehr als zwei Teilnehmern sind auch mehr als zwei Systeme SY erforderlich. Bei dem bekannten PCM4-Verfahren, bei dem vier Teilnehmer an die Leitung L angeschlossen sind, werden vier Systeme SY eingesetzt.

Ein derartiges System SY geht aus Fig. 2 genauer und in vergrößerter Darstellung hervor, in der nur die für das Verständnis der Erfindung erforderlichen Teile bzw. Schaltungen oder Bauteile eingezeichnet sind:

An der analogen Schnittstelle a/b ist ein Übertrager 1 angeschlossen, der mit einer Gabelschaltung 2 verbunden ist. Von der Gabelschaltung 2 gehen zwei getrennte Übertragungswege aus - je einer für eine Übertragungsrichtung -, in die A/D-Umsetzer 3 und 4 eingeschaltet sind. Beiden Übertragungswegen sind ein Steuerblock 5 und ein Leitungscodec 6 zugeordnet. Der Leitungscodec 6 ist mit der digitalen Schnittstelle U verbunden, an welche die Leitung L angeschlossen ist.

Der Steuerblock 5 ist ein intelligenter Baustein, der alle Funktionsabläufe innerhalb des Systems SY steuert. Es handelt sich beispielsweise um ein Gatearray, in dem digitale Schaltkreise zur Realisierung logischer Funktionen und/oder Abläufe auf einem Siliziumchip zusammengefaßt sind. Die vom A/D-Umsetzer 3 kommenden digitalen Signale werden im Steuerblock 5 formiert und im Leitungscodec 6 in einen leitungsverträglichen Code umcodiert.

Im Steuerblock 5 sind neben den für die Übertragung der Signale erforderlichen Bauteilen ein Sender S und ein Empfänger E vorhanden. Der Sender S sendet bei Aktivierung digitale Signale, beispielsweise bestimmte Bitmuster. Die Signale sollen so gewählt sein, daß das entsprechende analoge Signal im Hörbereich liegt, insbesondere zwischen 300 Hz und 3400 Hz. Sender S und Empfänger E sind mit dem einen Übertragungsweg verbindbar bzw. verbunden, der zwischen Sender S und Empfänger E durch einen Schalter 7 unterbrochen werden kann. Der Schalter 7 ist nur symbolisch eingezeichnet. Er wird in bevorzugter Ausführungsform durch einen Multiplexer bzw. einen digitalen Multiplexer realisiert.

In der Zuleitung für den Übertrager 1 ist zwischen der analogen Schnittstelle a/b und dem Übertrager 1 ein Schalter 8 vorhanden, der beispielsweise als Transistor ausgeführt sein kann. Der Schalter 8 könnte auch zwischen Übertrager 1 und Gabelschaltung 2 angeordnet sein. Bei geöffnetem Schalter 8 ist die Gabelschaltung 2 von der analogen Schnittstelle a/b abgetrennt.

Das Verfahren nach der Erfindung arbeitet beispielsweise wie folgt:

Wenn die Funktionsfähigkeit der "fernen" Schleife zwischen den beiden analogen Schnittstellen a/b der Vermittlungsstelle VST einerseits und der Teilnehmer T1 und T2 andererseits für einen Teilnehmer überprüft werden soll, wird beispielsweise der Sender S des Systems SY der Systemeinheit VA aktiviert. Gleichzeitig werden der Übertragungsweg für den Datenstrom der digitalen Signale unterbrochen (Schalter 7) und der Schalter 8 geöffnet.

Das vom Sender S ausgehende digitale Signal gelangt zum A/D-Umsetzer 4. Es wird von demselben in ein analoges, hörbares Signal umgesetzt, das von der wegen des geöffneten Schalters 8 verstimmten Gabelschaltung 2 reflektiert wird. Das reflektierte Signal gelangt zum A/D-Umsetzer 3, von dem es wieder in ein digitales Signal umgesetzt wird. Das digitale Signal durchläuft danach den Steuerblock 5 und den Leitungscodec 6. An der digitalen Schnittstelle U wird das Signal auf die Leitung L gegeben. Es durchläuft am fernen Ende das System SY der dortigen Systemeinheit TA mit Leitungscodec, Steuerblock, A/D-Umsetzern und verstimmter Gabelschaltung und gelangt über die Leitung L und den eigenen Leitungscodec 6 zum Empfänger E. Dort wird das digitale Signal gegebenenfalls als Signal des Senders S erkannt. Wichtig ist dabei, daß das Signal innerhalb einer vorgegebenen Zeit von beispielsweise 2 ms empfangen wird.

Jedes System SY der Systemeinheiten VA und TA kann in seinem Steuerblock 5 mit der geschilderten Sender/Empfänger-Kombination ausgerüstet sein. Es ist aber auch möglich, in jeder Systemeinheit VA bzw. TA nur eine Sender/Empfänger-Kombination vorzusehen, die auf den jeweiligen Teilnehmer umgeschaltet werden kann. Das kann vorzugsweise im Zeitmultiplexverfahren durchgeführt werden. Die Überprüfung eines Teilnehmers kann dann, beispielsweise durch Knopfdruck, entweder-in in der Vermittlungsstelle VST oder bei den Teilnehmern T1 und T2 ausgelöst werden. In bevorzugter Ausführungsform ist die Sender/Empfänger-Kombination nur in der Systemeinheit VA der Vermittlungsstelle VST vorhanden, weil die Überprüfung der Übertragungsstrecken in fast allen Fällen von dort aus durchgeführt wird. Es muß dann nur sichergestellt sein, daß bei Aktivierung des Senders S die Gabelschaltungen der Systemeinheit TA gegebenenfalls (ferne Schleife) von der analogen Schnittstelle a/b abgetrennt werden.

Wenn das Signal des Senders S nicht in der vorgegebenen Zeit oder überhaupt nicht am Empfänger E ankommt, liegt eine Störung auf dem Übertragungsweg vor. Zur leichteren Lokalisierung eines entsprechenden Fehlers kann im System SY das vom Sender S ausgehende Signal in einer "lokalen" Schleife über eine Verbindung 9 innerhalb des Steuerblocks 5 zum Empfänger E geführt werden. Damit kann festgestellt werden, ob die eigenen A/D-Umsetzer 3 und 4, die Gabelschaltung 2 und der Steuerblock 5 funktionsfähig sind. Der Empfänger E kann dazu durch einen Umschalter 10 auf den zweiten Übertragungsweg umgeschaltet werden. In diesem Fall brauchen die Gabelschaltungen 2 der jeweils anderen Systemeinheit VA oder TA nicht von der analogen Schnittstelle a/b abgetrennt zu werden.

Sender S, Empfänger E und Schalter 7 können grundsätzlich auch an den anderen Übertragungsweg im Steuerblock 5 angeschlossen werden.

Das Verfahren ist auch dann anwendbar, wenn in den Systemeinheiten VA und TA zusätzlich eine Umcodierung durchgeführt wird, beispielsweise nach dem ADPCM-Verfahren.

## Patentansprüche

1. Verfahren zur Überprüfung der Funktionsfähigkeit von Übertragungsstrecken nachrichtentechnischer Signale in einem Telefonnetz, mit welchem die Signale einer Vermittlungsstelle als analoge Signale zugeführt, zwischen einer Systemeinheit der Vermittlungsstelle und mindestens einem Teilnehmer in einem Datenstrom als digitale Signale übertragen und bei dem Teilnehmer von einer Systemeinheit desselben wieder als analoge Signale zu einem Endgerät des Teilnehmers geführt werden und bei welchem in beiden Systemeinheiten zwischen der analogen und der digitalen Schnittstelle ein Übertrager mit Gabelschaltung, A/D-Umsetzer, ein Steuerblock und ein Leitungscodec eingesetzt werden, dadurch gekennzeichnet,
- daß im Steuerblock (5) mindestens einer der Systemeinheiten an den Übertragungsweg der einen Übertragungsrichtung ein Sender (S) und ein Empfänger (E) für digitale Signale angeschlossen werden und
- daß bei Aktivierung des Senders (S) der Übertragungsweg für den Datenstrom der digitalen Signale unterbrochen und gleichzeitig zumindest die Gabelschaltung (2) der Systemeinheit, deren Sender (S) aktiviert ist, von der analogen Schnittstelle (a,b) abgetrennt werden.

2. Verfahren nach Anspruch 1, dadurch gekennzeichnet, daß bei zwei oder mehr Teilnehmern (T1,T2) für jeden Teilnehmer im Steuerblock (5) eine Sender/Empfänger-Kombination an den einen Übertragungsweg angeschlossen wird.

3. Verfahren nach Anspruch 1 oder 2, dadurch gekennzeichnet, daß für alle Teilnehmer (T1,T2) die gleiche, jeweils durch Zeitmultiplexierung anschaltbare Sender/Empfänger-Kombination verwendet wird.

4. Verfahren nach einem der Ansprüche 1 bis 3, dadurch gekennzeichnet, daß im Steuerblock (5) zusätzlich ein Verbindungsweg (9) angeordnet wird, durch welchen der Übertragungsweg, an den Sender (S) und Empfänger (E) nicht angeschlossen sind, mit dem Empfänger (E) verbunden wird, wenn nur die Gabelschaltung der Systemeinheit mit aktiviertem Sender von der analogen Schnittstelle abgetrennt wird.

5. Verfahren nach einem der Ansprüche 1 bis 3, dadurch gekennzeichnet, daß die Gabelschaltungen beider Systemeinheiten von der analogen Schnittstelle abgetrennt werden, wenn ein Sender (S) aktiviert wird.

## Claims

1. Method for checking the operational capability of transmission links for telecommunications signals in a telephone network, with which method the signals are fed to an exchange as analog signals, transmitted between a system unit of the exchange and at least one subscriber as digital signals in a data stream and, at the subscriber, routed from a system unit of the same, again as analog signals, to a terminal of the subscriber, and at which subscriber a transformer with a termination unit, A/D converter, a control block and a line codec are used in both system units between the analog and the digital interfaces, characterized
- in that, in the control block (5) of at least one of the system units, a transmitter (S) and a receiver (E) for digital signals are connected to the transmission path of one transmission direction, and
- in that, when the transmitter (S) is activated, the transmission path for the data stream of the digital signals is interrupted and at the same time at least the termination unit (2) of the system unit whose transmitter (S) is activated is disconnected from the analog interface (a, b).

2. Method according to Claim 1, characterized in that, in the case of two or more subscribers (T1, T2), a transmitter/receiver combination is connected to one transmission path for each subscriber in the control block (5).

3. Method according to Claim 1 or 2, characterized in that the same transmitter/receiver combination, which can be connected by means of time-division multiplexing, is used for all the subscribers (T1, T2).

4. Method according to one of Claims 1 to 3, characterized in that additionally arranged in the control block (5) is a connection path (9) by means of which the transmission path, to which the transmitter (S) and receiver (E) are not connected, is coupled to the receiver (E) if only the termination unit of the system unit with activated transmitter is disconnected from the analog interface.

5. Method according to one of Claims 1 to 3, characterized in that the termination units of the two system units are disconnected from the analog interface if a transmitter (S) is activated.

## Revendications

1. Procédé pour tester le fonctionnement d'un trajet de transmission pour des signaux de télécommunication dans un réseau téléphonique selon lequel les signaux entrent dans un central de commutation sous forme analogique alors qu'ils sont transmis entre un organe de ce central et au moins un abonné au sein d'un flux de données sous forme de signaux numériques, selon lequel ils sont enfin appliqués auprès de l'abonné par un organe du poste d'abonné à un terminal de cet abonné sous forme analogique, et selon lequel il y a dans les deux organes entre l'interface analogique et l'interface numérique un transformateur avec un circuit d'aiguillage, des convertisseurs analogique-numérique et inversement, un bloc de commande et un codeur/décodeur de ligne dénommé codec, caractérisé en ce
- que dans le bloc de commande (5) d'au moins un des organes, un émetteur (S) et un récepteur (E) pour des signaux numériques sont reliés à la voie de transmission selon l'une des directions de transmission, et
- que lors de l'activation de l'émetteur (S) la voie de transmission pour le flux de données des signaux numériques est interrompue et simultanément au moins le circuit d'aiguillage (2) de l'organe, dont l'émetteur (S) est activé, est isolé de l'interface analogique (a/b).

2. Procédé selon la revendication 1, caractérisé en ce qu'en cas de deux ou plusieurs abonnés (T1, T2), une combinaison distincte d'émetteur/récepteur est reliée à ladite voie de transmission pour chaque abonné dans le bloc de commande (5).

3. Procédé selon l'une des revendications 1 ou 2, caractérisé en ce qu'on emploie pour tous les abonnés (T1, T2) la même combinaison d'un émetteur et d'un récepteur qui est commutable par un multiplexage temporel.

4. Procédé selon l'une des revendication 1 à 3, caractérisé en ce qu'on prévoit en plus dans le bloc de commande (5) une liaison (9) permettant de relier au récepteur (E) la voie de transmission sur laquelle l'émetteur (S) et le récepteur (E) ne sont pas branchés, lorsque seul le circuit d'aiguillage de l'organe comportant l'émetteur activé est isolé de l'interface analogique.

5. Procédé selon l'une des revendications 1 à 3, caractérisé en ce que les circuits d'aiguillage des deux organes sont isolés de l'interface analogique lorsqu'un des émetteurs (S) est activé.
